# EUROPEAN PATENT APPLICATION

(11) **EP 2 555 508 A1**
(43) Date of publication of application: **06.02.2013**
(21) Application number: 11765214.9
(22) Date of filing: 30.03.2011
(51) Int. Cl.: H04N 5/32, G01T 1/20

(54) **RADIOLOGICAL IMAGE DETECTOR AND DRIVING METHOD THEREOF**

(30) Priority: 01.04.2010 JP 2010085249
(71) Applicant: Kabushiki Kaisha Toshiba, Minato-ku Tokyo 105-8001 (JP); Toshiba Electron Tubes & Devices Co., Ltd., Otawara-shi, Tochigi 324-8550 (JP)
(72) Inventor: AIDA, Hiroshi, Otawara-shi Tochigi 324-8550 (JP)
(74) Representative: HOFFMANN EITLE
(86) International application number: PCT/JP2011/001929
(87) International publication number: WO 2011/125312

(57) **Abstract**

To provide a radiation image detector able to prevent image deterioration caused by the malfunction of TFTs resulting from a continuous, incoming X-ray. The radiation image detector includes: a radiation sensor 11, which includes an image detection unit in which a plurality of pixels arranged in a two-dimensional manner on a substrate each are connected to one of a plurality of row select lines and to one of a plurality of signal lines; a gate drive circuit 13, which sequentially applies drive voltage to each of the row select lines; a drive control circuit 15 that generates a drive signal for the gate drive circuit 13; a reading circuit 17, which reads image signal information through the signal line connected to a group of pixels that are connected to an arbitrary row select line to which the drive voltage is applied, and also reads noise signal information through the signal line connected to all the pixels at a time when the drive voltage is not applied to all the row select lines; a reading control circuit 18, which generates a reading signal; and a noise correction circuit 19, which corrects the image signal information on the basis of the noise signal information.

## Description

### Technical Field

The present invention relates to a radiation image detector that includes, as an image detection unit, a plurality of pixels arranged in a grid pattern, and a method of driving the radiation image detector. More specifically, the present invention relates to a radiation image detector that is designed to prevent image deterioration that could occur when noise is mixed therein, and a method of driving the radiation image detector.

### Background Art

As a new-generation X-ray diagnosis detector, a radiation image detector that uses an active matrix has gained great attention. When the radiation image detector is irradiated with an X-ray, an X-ray photographed image or a real-time X-ray image is output as digital signals. Moreover, the radiation image detector is a planar solid-state detector. Therefore, expectations are quite high in terms of image-quality performance and stability. Research and development is under way in many universities and manufacturers.

The radiation image detectors are categorized into two types, a direct type and an indirect type.

According to the direct method, the X-ray is converted directly into charge signals by photoconductive film such as a-Se, and the charge signals are led to a capacitor for charge accumulation.

According to the indirect method, the X-ray is received by fluorescent layer, and converted into visible light. Then, the visible light is converted into signal charge by a-Si photodiodes or the like before being led to a capacitor for charge accumulation (See Patent Document 1, for example).

Many of the radiation image detectors currently put to practical use employ the indirect method.

A conventional indirect-type radiation image detector includes a fluorescence conversion film, and an image detection unit, which includes a plurality of pixels arranged in a two-dimensional manner and converts visible light into signal charge.

In the indirect-type radiation image detector, an incoming X-ray from outside is converted into visible light inside the fluorescence conversion film, and the generated visible light enters the image detection unit. In the image detection unit, the visible light that has entered the photodiodes inside the pixels is converted into charge, and the charge is accumulated in capacitative elements that are placed inside the photodiodes or connected in parallel.

The X-ray information that has been converted into charge is transmitted out of the image detection unit by signal lines, which are connected to pixels in a column direction, for each group of pixels connected to row select lines, which are arranged in a row direction, through switching elements (TFT transistors) connected to the photodiodes.

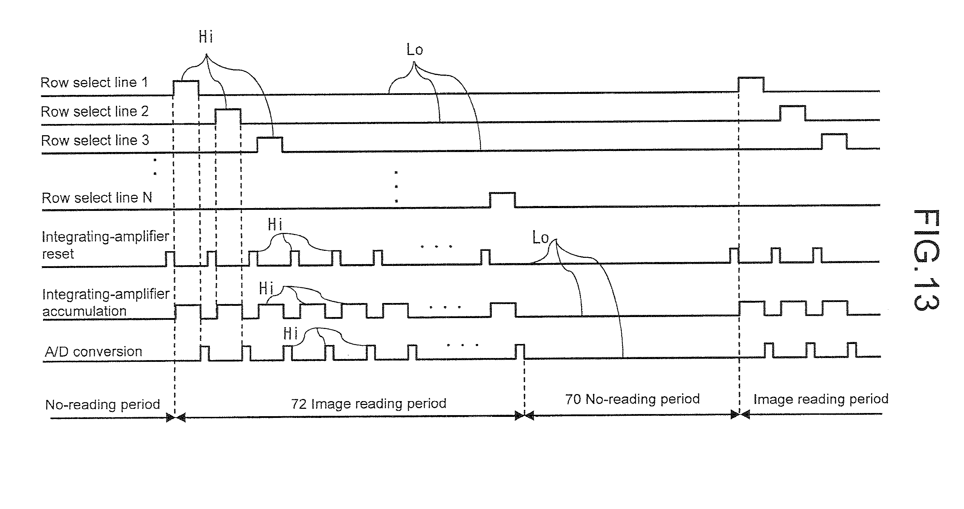

A method of driving the above radiation image detector will be described with the use of FIG. 13. A "row select line 1" shown in FIG. 13 is connected to a group of pixels of a top row in a plurality of pixels arranged in the image detection unit in a matrix pattern. A "row select line 2" is connected to a group of pixels of the second row from the top. Similarly, a "row select line 3" is connected to a group of pixels of the third row, and a row select line N to a group of pixels of the N^{th} (bottom) row.

The row select lines each are connected to gate terminals of TFTs, which are disposed inside pixels of corresponding rows. As for the voltage state of each of the row select lines, the voltage (Lo-state) that puts the connected TFTs in insulating state is applied thereto for most of the time. Only during a specific period, the voltage (Hi-state) that puts TFTs in conduction state is applied.

As shown in FIG. 13, all the periods during which the voltage that puts TFTs in conduction state is applied are different between the row select lines 1 to N. The voltage is first applied to the row select line 1 and then to the subsequent lines, with a certain period of time there between. Therefore, the charge signal from a pixel belonging to a row does not get mixed up with the charge signal from a pixel belonging to a different row. The signals are input to an integrating amplifier via a common signal line.

An operation of "integrating-amplifier reset" shown in FIG. 13 is to reset charge information accumulated in the integrating amplifier connected to the signal line at a time when a timing signal changes from Lo to Hi, thereby initializing the integrating amplifier. The integrating amplifier accumulates the charge flowing through the signal line, and converts the charge into voltage. For the operation, if the charge information from a pixel belonging to a specific row is to be accumulated, the accumulation of charge information from a pixel belonging to a different row needs to be released during the previous operation to perform a reset operation, thereby bringing back the initial state. The reset operation is carried out immediately before each of the row select lines is turned ON, thereby enabling only the signals from pixels belonging to a target row to be accumulated in the integrating amplifier.

An operation of "integrating-amplifier accumulation" shown in FIG. 13 is to carry out a charge accumulation operation of all integrating amplifiers connected to signal lines by bringing about the Hi-state, thereby accumulating the charge flowing through the signal lines. Meanwhile, an operation is also performed to stop the charge accumulation operation by bringing about the Lo-state, thereby stopping the accumulation of charges flowing through the signal lines.

An operation of "AD conversion" shown in FIG. 13 is to carry out analog/digital conversion using A/D converters that are so connected as to come after the integrating amplifiers. At a time when a timing signal changes from Lo to Hi, the analog signals that are accumulated in the integrating amplifiers and converted into voltage are converted into digital signals. As shown in FIG. 13, immediately after the timing signal of "integrating-amplifier accumulation" is changed from Hi-state to Lo-state, the timing signal of "AD conversion" is changed to Hi-state. As a result, at a time when the charge accumulation of the integrating amplifier is completed, A/D conversion is performed.

During the irradiation of the X-ray from the outside, the operations shown in FIG. 13 each are performed. Therefore, the integrating amplifiers operate only during a period of time when TFTs in each of row select lines are made conductive so as to allow charge signals from the pixels to flow through the signal lines. During an unnecessary period, noise signals that flow through the signal lines are blocked. Therefore, the incoming X-ray coming from the outside is converted into charge signals, which are then output to the outside as image information made up of digital signals.

### Citation List

### Patent Document

[Patent Document 1] Jpn. Pat. Appln. Laid-Open Publication No. 2009-128023

### Disclosure of the Invention

### Problems to be Solved by the Invention

However, even when the X-ray continuously enters the radiation image detector in terms of time, the X-ray that has passed through the fluorescence conversion film could also enter TFTs in insulating state. Part of the X-ray that has entered the TFTs is converted into charge inside the TFTs, which could lower the resistance between the drains and sources of the TFTs in insulating state. As a result, the charge, which originally should have been accumulated inside the pixels through the TFT elements in insulating state, ends up flowing into the signal lines. The signal lines that have flowed into overlap with signals from the pixels of rows to which the TFTs that are in conduction state at the time belong; and are output as image information to the outside via the integrating amplifiers.

That is, according to the original operation shown, in FIG. 13, it is possible to accurately output the image information of the incoming X-ray by amplifying the charge signals coming only from the pixels to which the TFTs that are made conductive in response to the voltage state of the row select lines belong, and converting the charge signals into digital signals. However, the resistance value is lowered by the X-ray with which the TFTs in insulating state are irradiated. Thus, the charge signals from the other pixels get mixed therein, and inaccurate image information is output to the outside as a result.

The radiation image detector for medical use is designed to emit a minimum amount of X-ray to avoid exposure to the X-ray. The intensity of the X-ray that contains information about the internal structure of the body after passing through the human body is very low, and the strength of signals output to the outside is also low. On the other hand, since the high-intensity X-ray that has passed through any area other than the human body enters the radiation image detector at the same time, the malfunction of the TFTs caused by the high-intensity incoming X-ray is unavoidable.

To solve the above problem, one available technique is to use a pulsed X-ray.

According to the technique, a pulsed X-ray is used: in the operation of the radiation image detector shown in FIG. 13, the X-ray is only emitted during an no-reading period 70 when no charge is read from pixels. During image reading periods 72 that appear before and after the no-reading periods 70, no X-ray is emitted.

When the above technique is used, even if a TFT starts malfunctioning due to the incoming X-ray, and the signals from pixels get mixed into the signal lines via the TFT whose insulation performance has been lowered, the integrating amplifiers and A/D converters that are connected to the signal lines are not operating.
Therefore, the image information into which unnecessary charge information have been mixed is not output.

However, a device for generating the pulsed X-ray is more expensive than a device for generating the continuous X-ray.
Moreover, the information cannot be obtained during a period of time when the pulsed X-ray is not generated. Furthermore, for the no-reading periods, sufficient time is required to allow the X-ray pulse to enter, which puts a restriction on the operation of the radiation image detector. Because of the above restriction, the image updating speed of the radiation image detector is restricted, making it difficult to detect the X-ray image that changes at high speed.

The present invention has been made in view of the above problems. An object of the present invention is to provide a radiation image detector able to prevent image deterioration caused by the malfunction of TFTs resulting from the continuous, incoming X-ray, and a method of driving the radiation image detector.

### Means for Solving the Problems

To achieve the above object, according to the present invention, a radiation image detector is characterized by including: a radiation sensor that includes an image detection unit, in which a plurality of pixels for converting visible light into signal information are arranged in a two-dimensional manner on a substrate and the plurality of pixels each are connected to one of a plurality of row select lines extending in a row direction and to one of a plurality of signal lines extending in a column direction, and a fluorescence conversion film, which is placed on the plurality of pixels and converts radiation into visible light; a gate drive circuit that sequentially applies drive voltage to each of the row select lines; a drive control circuit that generates a drive signal for determining a scanning timing of the column direction for the gate drive circuit; a reading circuit that reads image signal information through the signal line connected to a group of pixels that are connected to one arbitrary row select line to which the drive voltage is applied, and also reads noise signal information through the signal line connected to all the pixels at a time when the drive voltage is not applied to all the row select lines; a reading control circuit that generates a reading signal for determining a reading timing in the reading circuit; and a noise correction circuit that corrects the image signal information on the basis of the noise signal information.

To achieve the above object, according to the present invention, a method of driving a radiation image detector, which has a radiation sensor that includes an image detection unit, in which a plurality of pixels for converting visible light into signal information are arranged in a two-dimensional manner on a substrate and the plurality of pixels each are connected to one of a plurality of row select lines extending in a row direction and to one of a plurality of signal lines extending in a column direction, and a fluorescence conversion film, which is placed on the plurality of pixels and converts radiation into visible light, is characterized by including the steps of: applying sequentially drive voltage to each of the row select lines; reading image signal information through the signal line connected to a group of pixels that are connected to one arbitrary row select line to which the drive voltage is applied; reading noise signal information through the signal line connected to all the pixels at a time when the drive voltage is not applied to all the row select lines; and correcting the image signal information on the basis of the noise signal information.

### Advantages of the Invention

According to the present invention, it is possible to prevent image deterioration caused by the malfunction of TFTs resulting from the continuous, incoming X-ray.

### Brief Description of the Drawings

FIG. 1 is a schematic diagram showing a radiation image detector according to a first embodiment of the present invention.
FIG. 2 is a perspective view showing one example of a radiation sensor used in the radiation image detector shown in FIG. 1.
FIG. 3 is a partially enlarged view of a surface of an image detection unit shown in FIG. 2.
FIG. 4 is a diagram showing a circuit equivalent to the image detection unit shown in FIG. 2.
FIG. 5 is a diagram showing a circuit equivalent to the inside of a pixel.
FIG. 6 is a plane view showing one example of a gate drive circuit and a reading circuit shown in FIG. 1.
FIG. 7 is a schematic diagram showing an integrating amplifier circuit of the radiation image detector according to the first embodiment of the present invention.
FIG. 8 is a timing chart showing a method of driving the radiation image detector according to the first embodiment of the present invention.
FIG. 9 is a timing chart showing a method of driving a radiation image detector according to a second embodiment of the present invention.
FIG. 10 is a timing chart showing a method of driving a radiation image detector according to a third embodiment of the present invention.
FIG. 11 is a schematic diagram showing an integrating amplifier circuit of a radiation image detector according to a fourth embodiment of the present invention.
FIG. 12 is a timing chart showing a method of driving the radiation image detector according to the fourth embodiment of the present invention.
FIG. 13 is a timing chart showing a method of driving a conventional radiation image detector.

### Best Mode for Carrying Out the Invention

Hereinafter, with reference to the accompanying drawings, embodiments of the present invention will be described.

### [First embodiment]

### (Overall configuration of radiation image detector)

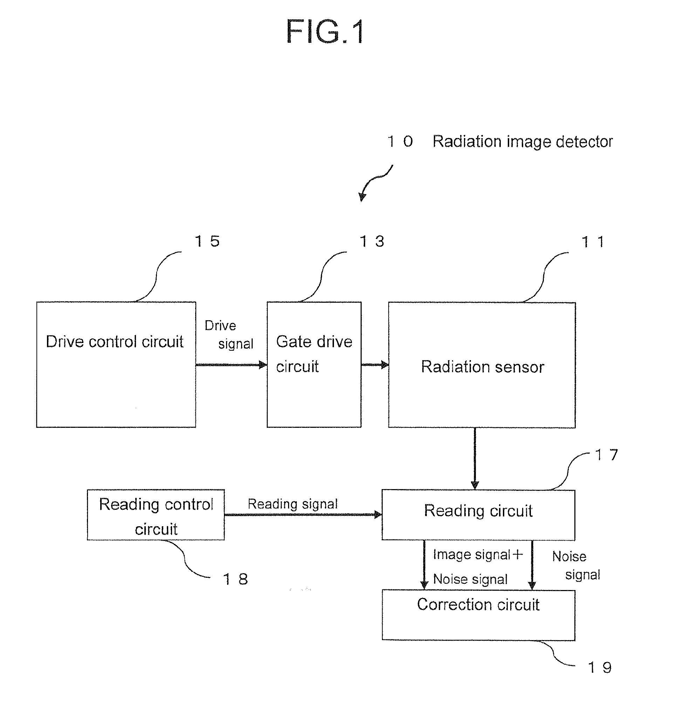

FIG. 1 shows a first embodiment of a radiation image detector according to the present invention.

The radiation image detector 10 includes a radiation sensor 11, which includes a fluorescent layer for converting an incoming X-ray into light, and an image detection unit for converting an incoming light into electrical signals; a gate drive circuit 13, which sequentially applies a drive voltage to each scanning line of pixels that are arranged in a two-dimensional manner in the image detection unit; a drive control circuit 15, which generates a drive signal that determines a scan timing of a column direction for the gate drive circuit 13; a reading circuit 17, which reads electrical signals of one line of pixels selected and amplifies the electrical signals; a reading control circuit 18, which generates a reading signal that determines a reading timing for the reading circuit 17; and a correction circuit 19, which subtracts noise signals from image signals into which the noise signals have been mixed to carry out noise correction.

### (Radiation sensor 11)

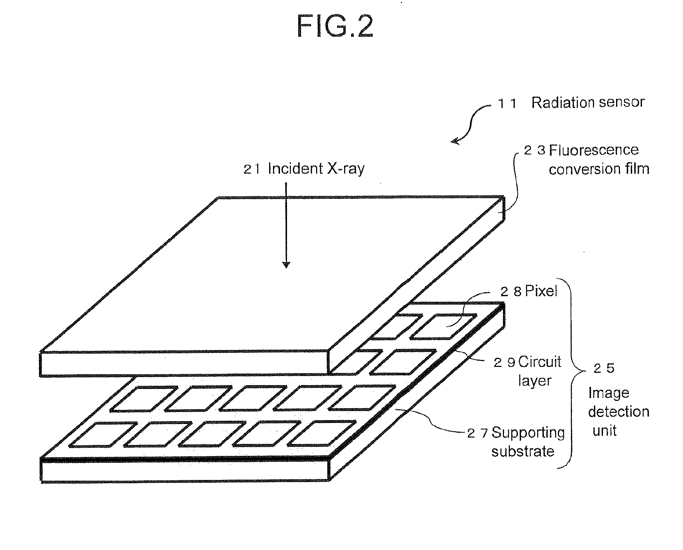

FIG. 2 shows one example of the specific configuration of the radiation sensor 11.

The radiation sensor 11 includes a fluorescence conversion film 23, which converts an incoming X-ray 21 into fluorescence, and an image detection unit 25, which converts the fluorescence into image information made up of electrical signals.

The image detection unit 25 is formed by providing a circuit layer 29 in which, on a holding substrate 27 that is made mainly of glass substrate, a large number of pixels 28, which contain photodiodes and thin-film transistors (TFT), are arranged.

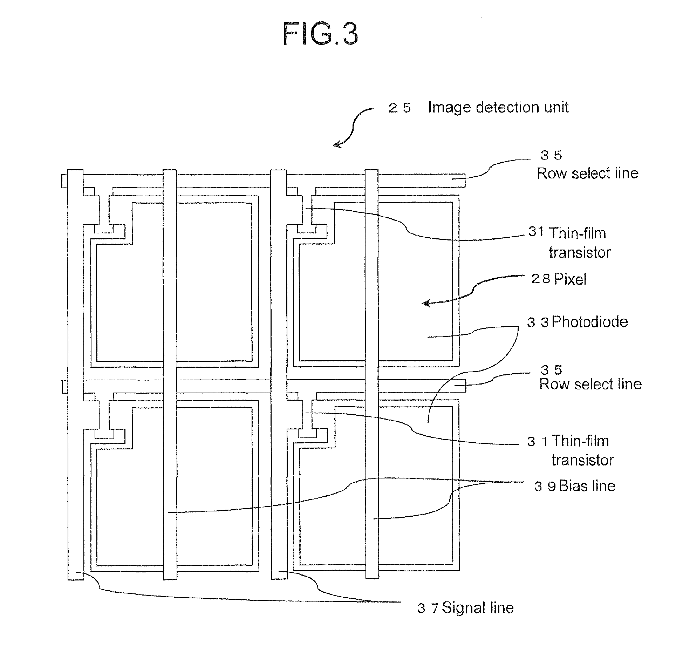

FIG. 3 is a partially enlarged view of a surface of the image detection unit 25.

On the surface of the image detection unit 25, the pixels 28 containing thin-film transistors 31 and photodiodes 33 are arranged in a grid pattern. The pixels 28 each are connected to one of a plurality of row select lines 35 that are disposed in a row direction, and are also connected to one of a plurality of signal lines 37 that are disposed in a column direction. The photodiodes 33 each are connected to one of a plurality of bias lines 39 that are disposed in the column direction.

The image detection unit 25 is produced by TFT-panel production process, which resembles a process of producing liquid crystal display devices. That is, after the signal lines (row select lines 35 and signal lines 37) and the thin-film transistors 31 are formed on the holding substrate 27, the photodiodes 33 are formed thereon in a grid pattern. The outputs of the photodiodes 33 are electrically connected to the thin-film transistors 31, which are disposed below the photodiodes 33. Then, the bias lines 39 are formed. In this manner, the image detection unit 25 is produced.

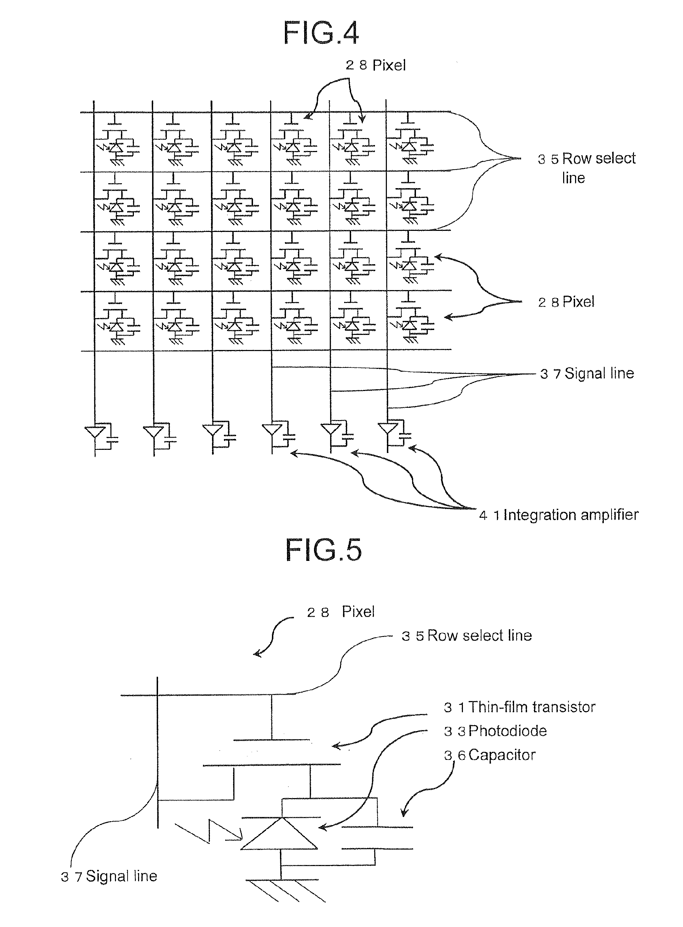

FIG. 4 shows a circuit equivalent to the image detection unit 25. FIG. 5 shows a circuit equivalent to the inside of a pixel 28.

The pixel 28 includes a thin-film transistor 31, a photodiode 33, and a capacitor 36. To a gate of the thin-film transistor 31, a row select line (gate line) 35 is connected. To a source of the thin-film transistor 31, a signal line 37 is connected. To a drain of the thin-film transistor 31, the photodiode 33 and the capacitor 36 are connected in parallel. Incidentally, the capacitor 36 is capacitance between electrodes of the photodiode 33.

To the ends of the signal lines 37, integrating amplifiers 41 are connected on a one-to-one basis: the integrating amplifiers 41 have a function of amplifying charge signals that are transmitted through the signal lines 37, and outputting the charge signals to outside.

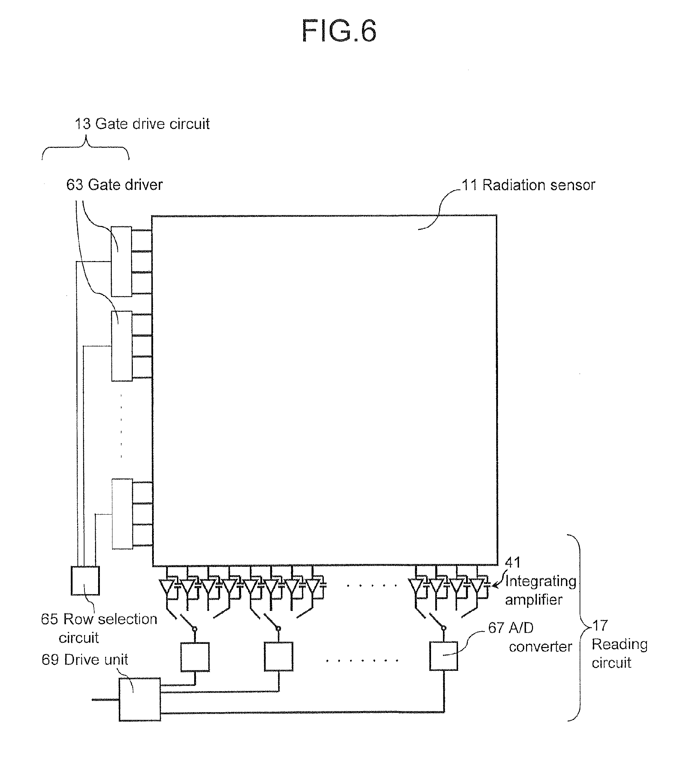

The row select lines (gate lines) 35 are connected to specific signal lines of gate drivers 63 shown in FIG. 6.

### (Gate drive circuit 13 and reading circuit 17)

FIG. 6 shows one example of the specific configuration of the gate drive circuit 13 and the reading circuit 17 shown in FIG. 1.

The gate drive circuit 13 includes gate drivers 63 and a row selection circuit 65. The reading circuit 17 includes integrating amplifiers 41, A/D (analog/digital) converters 67, and a drive unit 69.

The gate drivers 63 have a function of sequentially changing the voltage of many signal lines connected to the radiation sensor 11 after receiving signals from the outside. To the gate drivers 63, the row selection circuit 65 is connected.

The row selection circuit 65 has a function of transmitting signals to the corresponding gate drivers 63 in accordance with the scanning direction of an X-ray image. The row selection circuit 65 is connected to the drive control circuit 15 shown in FIG. 1.

The integrating amplifiers 41 are connected to the drive unit 69 via the A/D converters 67. The drive unit 69 is connected to the reading control circuit 18 shown in FIG. 1. In response to reading signals from the reading control circuit 18, the drive unit 69 reads signals digitalized by the A/D converters 67.

### (Operation of radiation image detector 10)

The following describes an operation of the above X-ray image detector 10.

In initial state, electric charge is accumulated in the capacitor 36 shown in FIG. 5. To the photodiode 33 that is connected in parallel to the capacitor 36, the voltage of a reverse bias state is applied. At this time, the voltage is the same as that applied to the signal line 37. Since the photodiode 33 is one type of diode, almost no current flow therethrough even as the reverse-bias voltage is applied. Accordingly, the charge accumulated in the capacitor 36 does not decrease, and continues to be retained.

Under the above circumstances, as the incoming X-ray 21 shown in FIG. 2 enters the fluorescence conversion film 23, the high-energy X-ray is converted into a large number of low-energy visible light rays inside the fluorescence conversion film 23. Part of the fluorescence generated in the fluorescence conversion film 23 reaches the photodiode 33, which is disposed on the surface of the image detection unit 25.

The fluorescence that has entered the photodiode 33 shown in FIG. 5 is converted in the photodiode 33 into the charge consisting of electrons and holes, which then travels to the two terminals of the photodiode 33 along a direction of an electric field applied to the capacitor 36. As a result, the fluorescence is observed as the current flowing through the photodiode 33.

The current generated inside the photodiode 33 flows into the capacitor 36, which is connected in parallel to the photodiode 33, and behaves in such a way as to cancel the charge accumulated in the capacitor 36. As a result, the charge accumulated in the capacitor 36 decreases; the potential difference between the terminals of the capacitor 36 becomes lower than that in initial state.

In FIG. 6, the gate drivers 63 have a function of sequentially changing the potential of many control lines. However, there is only one control line that is changing in potential at a particular time. The terminal between the source and drain of a thin-film transistor 31 connected in parallel to a row select line 35 connected to the above control line changes from insulating state to conduction state.

A specific voltage is applied to each signal line 37 shown in FIG. 5. The voltage is applied to a capacitor 36 that is connected through the source and drain terminals of a thin-film transistor 31 connected to the row select line 35 that has changed in potential.

In initial state, the potential of the capacitor 36 is in the same state as that of the signal line 37. Therefore, if the amount of charge in the capacitor 36 remains unchanged since the initial state, there is no movement of charge in the capacitor 36 from the signal line 37. However, in the capacitor 36 that is connected in parallel to the photodiode 33 into which the fluorescence generated inside the fluorescence conversion film 23 by the incoming X-ray 21 coming from the outside has been entered, the charge accumulated therein has decreased, and the potential has changed from that in the initial state. Therefore, through the thin-film transistor 31 that has turned conductive, the charge moves from the signal line 37, and the amount of charge accumulated in the capacitor 36 returns to the initial state. Moreover, the amount of charge that has moved is transformed into signals that flow through the signal line 37, and the signals are transmitted to the outside.

The current that flows through the signal line 37 shown in FIG. 5 is input into the corresponding integrating amplifier 41. The integrating amplifiers 41 integrates the current flowing for a certain period of time, and outputs to the outside the voltage corresponding to the integrated value. The operation makes it possible to convert the amount of charge flowing through the signal line for a certain period of time into a voltage value. As a result, the charge signal that varies according to the strength distribution of the fluorescence generated in the fluorescence conversion film 23 by the incoming X-ray 21 is generated inside the photodiode 33, and the charge signal is then converted by the integrating amplifier 41 into potential information.

The potential generated by the integrating amplifiers 41 is sequentially converted into digital signals in the A/D converters 67 shown in FIG. 6. The signals that have become digital values pass through the drive unit 69. Then, in the correction circuit 19 shown in FIG. 1, noise signals are removed from the signals. The signals are then sequentially arranged in an image synthesis circuit, which is not shown in the diagrams, in accordance with the pixel rows and columns disposed on the circuit layer 29, and are output to the outside as image signals.

The image information that is made up of electrical signals output to the outside can be easily turned into an image by a typical display device. In this manner, the X-ray image can be viewed as a visible-light image.

### (Method of driving radiation image detector 10)

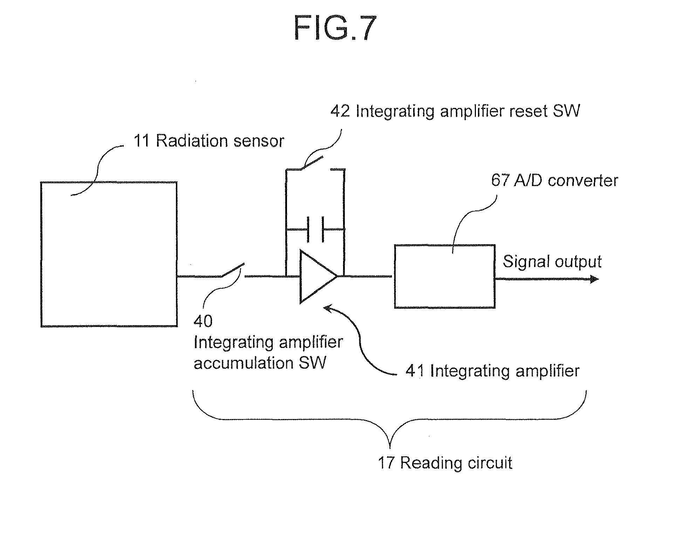

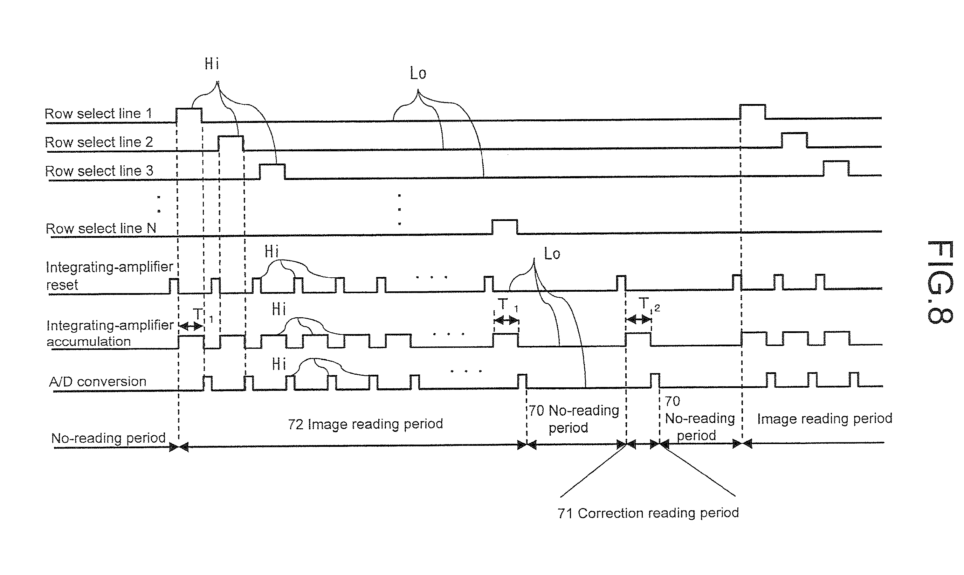

FIG. 7 is a schematic diagram showing an integrating amplifier circuit of the radiation image detector 10. FIG. 8 is a timing chart showing one example of a method of driving the radiation image detector 10.

A "row select line 1" shown in FIG. 8 is connected to a group of pixels of a top row in a plurality of pixels 28 arranged in a matrix pattern in the image detection unit 25 shown in FIG. 1. A "row select line 2" is connected to a group of pixels of the second row from the top. Similarly, a "row select line 3" is connected to a group of pixels of the third row, and a row select line N to a group of pixels of the N^{th} (bottom) row.

As shown in FIG. 5, the row select lines 35 each are connected to gate terminals of the thin-film transistors (TFTs) 31, which are disposed inside the pixels 28 of the corresponding rows. Based on timing signals of the row select lines 1 to N shown in FIG. 8 that are generated by the drive control circuit 15 shown in FIG. 1, the gate drive circuit 13 applies voltage to the row select lines 1 to N. As shown in FIG. 8, to the row select lines 1 to N, the voltage (Lo-state) that puts the connected TFTs in insulating state is applied for most of the time. Only during a specific period, the voltage (Hi-state) that puts the thin-film transistors (TFTs) 31 in conduction state is applied.

All the periods during which the voltage that puts the thin-film transistors (TFTs) 31 in conduction state is applied by the gate drive circuit 13 to the row select lines 1 to N are different. As shown in FIG. 8, the voltage is first applied to the row select line 1 and then to the subsequent lines, and finally to the row select line N, with a certain period of time therebetween.
Therefore, the charge signal from a pixel 28 belonging to a row does not get mixed up with the charge signal from a pixel 28 belonging to a different row. The signals are input to the integrating amplifier 41 via a common signal line 37.

An operation of "integrating-amplifier reset" shown in FIG. 8 is to turn an integrating amplifier reset SW 42 in the reading circuit 17 ON as shown in FIG. 7 on the basis of a timing signal generated by the reading control circuit 18 shown in FIG. 1, thereby resetting and initializing the charge information accumulated in the integrating amplifiers 41. The integrating amplifiers 41 accumulate the charge that flow through the signal lines 37 shown in FIG. 4, and convert the charge into voltage (Incidentally, for ease of explanation, FIG. 4 shows no integrating amplifier accumulation SW 40, which is shown in FIG. 7). For the operation, if the charge information from a pixel 28 belonging to a specific row is to be accumulated, the accumulation of charge information from a pixel 28 belonging to a different row is released during the previous operation to perform a reset operation, thereby bringing back the initial state. The reset operation is carried out immediately before each of the row select lines is turned ON, thereby enabling only the signals from the pixels 28 belonging to a target row to be accumulated in the integrating amplifiers 41.

An operation of "integrating-amplifier accumulation" shown in FIG. 8 is to turn an integrating amplifier accumulation SW 40 in the reading circuit 17 shown in FIG. 7 ON, thereby carrying out a charge accumulation operation of all integrating amplifiers 41 connected to the signal lines 37 at a time when a signal from the reading control circuit 18 (See FIG. 1) is in Hi-state in order to accumulate the charge flowing through the signal lines 37. Meanwhile, an operation is also performed to stop the accumulation of charge flowing through the signal lines 37 by stopping the charge accumulation operation at the time of Lo-state.

An operation of "AD conversion" shown in FIG. 8 is to carry out analog/digital conversion using A/D converters 67 that are so connected as to come after the integrating amplifiers 41 shown in FIG. 6. At a time when a timing signal from the reading control circuit 18 (See FIG. 1) changes from Lo to Hi, the analog signals that are accumulated in the integrating amplifiers 41 and converted into voltage are converted by the A/D converters 67 into digital signals. As shown in FIG. 8, immediately after the timing signal of "integrating-amplifier accumulation" is changed from Hi-state to Lo-state, the timing signal of "AD conversion" is changed to Hi-state. As a result, at a time when the charge accumulation of the integrating amplifiers 41 is completed, A/D conversion is performed.

During the irradiation of the X-ray from the outside, the operations shown in FIG. 8 each are performed. Therefore, the integrating amplifiers 41 operate only during a period of time when the TFTs in each of the row select lines 35 are made conductive so as to allow charge signals from the pixels 28 to flow through the signal lines. During an unnecessary period, noise signals that flow through the signal lines are blocked. Therefore, the incoming X-ray coming from the outside is converted into charge signals, which are then output to the outside as image information made up of digital signals.

According to the present embodiment, a correction reading period 71 is provided during an no-reading period 70 shown in FIG. 8. During the correction reading period 71, all the row select lines that are connected to the pixels 28 are OFF; the TFT elements in the pixels 28 that are connected to the row select lines are in insulating state.

If the continuous X-ray enters the radiation image detector 10 of the present embodiment from the outside, the image information that is detected during an image reading period 72 and output from the A/D converters 67 is the same as that of the conventional radiation image detector shown in FIG. 13. Accordingly, as in the conventional case, it is not possible to prevent noise from being mixed into the X-ray image information, a trouble that is triggered by the malfunction of the TFTs caused by the incoming X-ray.

However, during the correction reading period 71, the information about the charge flowing through the signal lines 37 is obtained. Therefore, it is possible to obtain information about the leakage current from the pixels 28 to which the TFTs that malfunction due to the incoming X-ray and deteriorate in terms of insulating state belong.

That is, the leakage current that flows through the signal lines 37 during the correction reading period 71 is a leakage current coming from the pixels to which the following TFTs belong: the TFTs that are connected to the row select lines that are turned OFF, but start to malfunction due to the incoming X-ray and deteriorate in terms of insulating state. The above leakage current is the same as those mixed into the charge signals from the pixels 28 that are connected to the row select lines that are turned ON during the image reading period 72.

It is assumed that the distribution and intensity of the incoming X-ray would not change during one image acquisition process, which consists of the image reading period 72, the no-reading period 70, and the correction reading period 72. Therefore, the value of the current flowing through the signal lines 37 during the correction reading period 71 is calculated by subtracting the leakage current coming from a TFT that is ON from the leakage current coming from a TFT that is connected to a row select line that is OFF at a time when another arbitrary row select line is ON.

There is a very large number of row select lines. Compared with the entire leakage current, a difference in the value of leakage current of one line is a very small number. Therefore, if an individual integrating amplifier accumulation time T₁ during the image reading period 72 is equal to an integrating amplifier accumulation time T₂ during the correction reading period 71, the charge information detected during the correction reading period 71 turns out to be substantially equal to the amount of charge from a malfunctioning TFT that has been mixed into the charge information from each pixel 28 detected during the image reading period 72.

Accordingly, it is possible to reproduce the original X-ray image by subtracting the charge information detected during the above correction reading period 71 from the X-ray image information into which the image information from a TFT that has malfunctioned due to the incoming X-ray becomes mixed.

More specifically, the charge information made up of the image signals which have been obtained by performing integrating-amplifier accumulation during the accumulation time T₁ in the image reading period 72 and into which noise signals have been mixed, and the charge information made up of the noise signals which have been obtained by performing integrating-amplifier accumulation during the accumulation time T₂ (T₂ = T₁) in the correction reading period 71 are put into the correction circuit 19 shown in FIG. 1. The correction circuit 19 then subtracts the charge information made up of the noise signals from the charge information made up of the image signals into which the noise signals have been mixed. As a result, only the original image signals, from which the noise signals have been removed, can be obtained.

According to the present embodiment, the components that need to be added to the conventional radiation image detector are almost nonexistent. Moreover, there is no restriction on the operation of the radiation image detector. Therefore, it is possible to provide the radiation image detector able to prevent the deterioration of images associated with the noise mixed therein at a cost almost equal to that of the conventional device.

### [Second Embodiment]

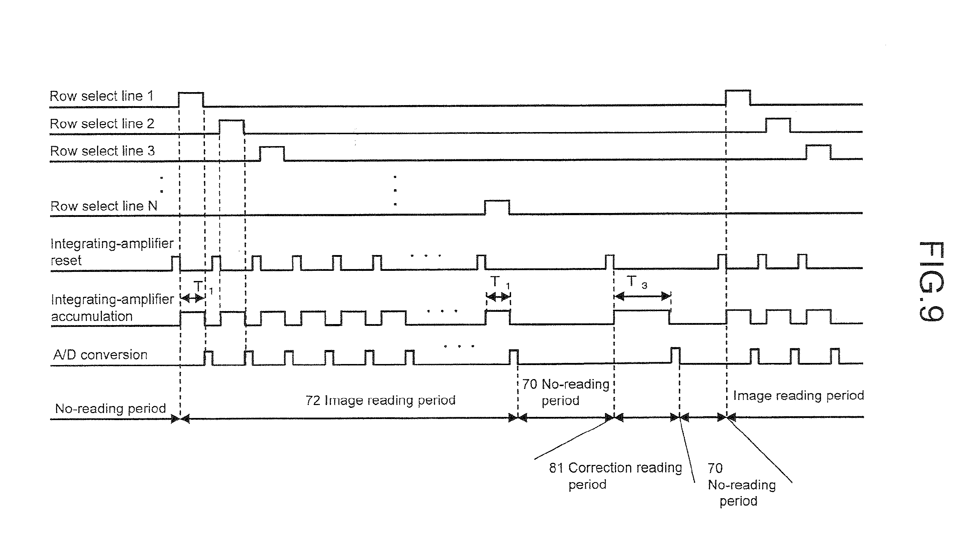

FIG. 9 is a timing chart showing one example of another drive method of the radiation image detector 10.

According to the present embodiment, the radiation image detector 10 is driven in the same way as in the first embodiment except that an integrating amplifier accumulation time T₃ during a correction reading period 81 shown in FIG. 9 is set longer than the integrating amplifier accumulation time T₂ of the first embodiment.

For example, if the integrating amplifier accumulation time T₃ is so set as to be double the integrating amplifier accumulation time T₂, the amount of charge obtained also doubles. However, there is no change in the amount of noise generated from the integrating amplifiers 41 and the A/D converters 67.

Accordingly, the amount of charge obtained is halved so as to be equal to the amount of charge during the integration time T₂. Moreover, the amount of noise generated from the integrating amplifiers 41 and the A/D converters 67 also can be halved. Therefore, in correcting the X-ray image, the amount of correction charge with a small amount of noise from the integrating amplifiers 41 and the A/D converters 67 can be used. As a result, it is possible to easily make a higher-accuracy X-ray image.

In the radiation image detector 10, a large number of integrating amplifiers 41 need to be used to amplify high-magnification, small signals. However, the outputs of the integrating amplifiers 41 can easily change depending on environmental temperatures and operating conditions. Therefore, as the radiation image detector 10 starts to operate, the operating points of the integrating amplifiers 41 could change due to a rise in the temperature inside the device, and non-negligible noise could be mixed into the X-ray image output as a result. Similarly, as for the TFT elements inside the pixels 28, the insulating performance in OFF-state could change due to the temperature, having an adverse effect on the X-ray image as the leakage current flows from the TFTs mainly due to a rise in the temperature. Such an adverse effect can be easily corrected by the drive method of the present embodiment, and the X-ray image with a further smaller amount of noise can be obtained.

Incidentally, in terms of reducing the noise, it is preferred that the integrating amplifier accumulation time T₃ be set so as to be two to ten times as large as the integrating amplifier accumulation time T₂.

### [Third Embodiment]

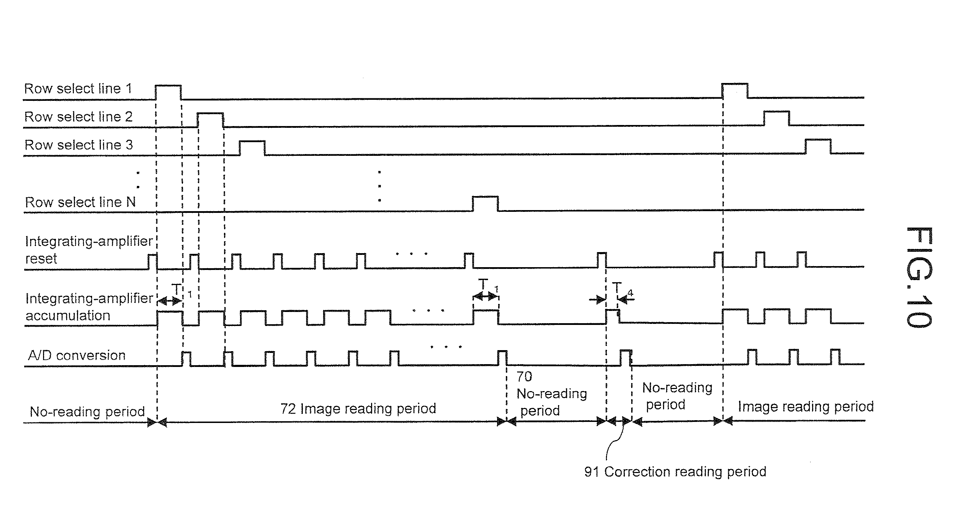

FIG. 10 is a timing chart showing one example of another drive method of the radiation image detector 10.

According to the present embodiment, the radiation image detector 10 is driven in the same way as in the first embodiment except that an integrating amplifier accumulation time T₄ during a correction reading period 91 shown in FIG. 10 is set shorter than the integrating amplifier accumulation time T₂ of the first embodiment.

As a result, the no-reading periods overall can be shortened. By shortening the image update rate of the radiation image detector, the X-ray image that changes at high speed can be detected.

### [Fourth Embodiment]

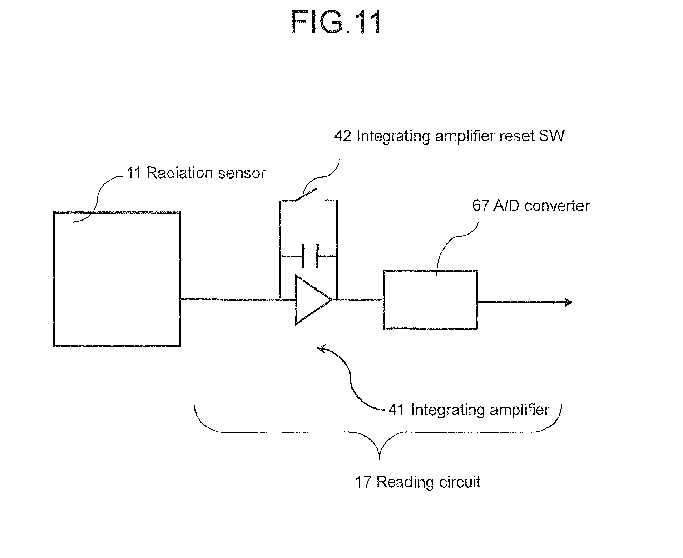

A radiation image detector of the present embodiment is formed in the same way as the radiation image detector 10 of the first embodiment except that an integrating amplifier circuit is formed as shown in FIG. 11.

The integrating amplifier circuit shown in FIG. 11 is formed by removing only the integrating amplifier accumulation SW 40 from the integrating amplifier circuit shown in FIG. 7. However, by turning the integrating amplifier reset SW 42 shown in FIG. 11 ON and OFF, the same function that is realized by turning the integrating amplifier accumulation SW 40 ON and OFF is available.

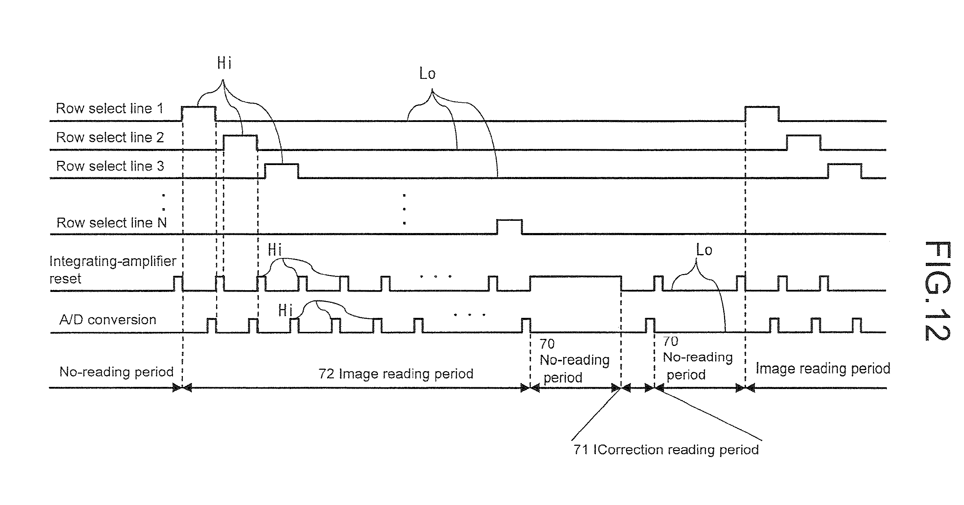

A drive method of a radiation image detector having the integrating amplifier circuit shown in FIG. 11. will be described with the use of a timing chart shown in FIG. 12.

An operation of "row select lines 1 to N" is the same as that of the radiation image detector 10 having the integrating amplifier circuit shown in FIG. 7. The operation is performed to sequentially apply voltage in such a way as to sequentially make the thin-film transistors (TFTs) 31 conductive from the row select line 1.

An operation of "integrating-amplifier reset" shown in FIG. 12 is to turn the integrating amplifier reset SW 42 in the reading circuit 17 ON as shown in FIG. 11 (the Hi-state in FIG. 12) on the basis of a timing signal generated by the reading control circuit 18 shown in FIG. 1, thereby resetting and initializing the charge information accumulated in the integrating amplifiers 41. Then, the integrating amplifier reset SW 42 is turned OFF (the Lo-state in FIG. 12). As a result, the integrating amplifiers 41 accumulate the charge flowing through the signal lines 37 shown in FIG. 4, and convert the charge into voltage.

For the operation, if the charge information from a pixel 28 belonging to a specific row is to be accumulated, the accumulation of charge information from a pixel 28 belonging to a different row is released during the previous operation to perform a reset operation, thereby bringing back the initial state. The reset operation is carried out immediately before each of the row select lines is turned ON, thereby enabling only the signals from the pixels 28 belonging to a target row to be accumulated in the integrating amplifiers 41.

If the integrating amplifier reset SW 42 shown in FIG. 12 is ON, an operation is performed so as to erase the charge information accumulated in the integrating amplifier shown in FIG. 11. If the integrating amplifier reset SW 42 is OFF, the charge is accumulated in the integrating amplifier 41 shown in FIG. 11, and the charge information is output.

Even immediately before the correction reading period 71 shown in FIG. 12, the integrating amplifier reset SW 42 remains ON (the Hi-state in FIG. 12). During the correction reading period 71, the integrating amplifier reset SW 42 remains OFF (the Lo-state shown in FIG. 12). Therefore, the charge information flowing through the signal lines 37 during the correction reading period 71 is accumulated in the integrating amplifier 41. As a result, it is possible to output the charge information flowing through the signal lines at any time other than the pixel reading period 72.

By performing the above-described operation, the radiation image detector of the present embodiment, too, can achieve the same advantageous effects as those of the radiation image detector 10 of the first embodiment.

### Explanation of Reference Symbols

- 10:: Radiation image detector
- 11:: Radiation sensor
- 13:: Gate drive circuit
- 15:: Drive control circuit
- 17:: Reading circuit
- 18:: Reading control circuit
- 19:: Correction circuit
- 21:: Incoming X-ray
- 23:: Fluorescence conversion film
- 25:: Image detection unit
- 27:: Holding substrate
- 28:: Pixel
- 29:: Circuit layer
- 31:: Thin-film transistor
- 33:: Photodiode
- 35:: Row select line
- 36:: Capacitor
- 37:: Signal line
- 40:: Integrating amplifier accumulation SW
- 41:: Integrating amplifier
- 42:: Integrating amplifier reset SW
- 63:: Gate driver
- 65:: Row selection circuit
- 67:: A/D converter
- 70:: No-reading period
- 71:: Correction reading period
- 72:: Image reading period
- 81:: Correction reading period
- 91:: Correction reading period

## Claims

1. A radiation image detector, **characterized by** comprising:
a radiation sensor that includes an image detection unit, in which a plurality of pixels for converting visible light into signal information are arranged in a two-dimensional manner on a substrate and the plurality of pixels each are connected to one of a plurality of row select lines extending in a row direction and to one of a plurality of signal lines extending in a column direction, and a fluorescence conversion film, which is placed on the plurality of pixels and converts radiation into visible light;
a gate drive circuit that sequentially applies drive voltage to each of the row select lines;
a drive control circuit that generates a drive signal for determining a scanning timing of the column direction for the gate drive circuit;
a reading circuit that reads image signal information through the signal line connected to a group of pixels that are connected to one arbitrary row select line to which the drive voltage is applied, and also reads noise signal information through the signal line connected to all the pixels at a time when the drive voltage is not applied to all the row select lines;
a reading control circuit that generates a reading signal for determining a reading timing in the reading circuit; and
a noise correction circuit that corrects the image signal information on the basis of the noise signal information.

2. The radiation image detector according to claim 1, **characterized in that**
in the reading circuit, a period T₁ during which the image signal information is read is equal to a period T₂ during which the noise signal information is read.

3. The radiation image detector according to claim 1, **characterized in that**
in the reading circuit, a period T₃ during which the noise signal information is read is longer than a period T₁ during which the image signal information is read.

4. A method of driving a radiation image detector having a radiation sensor that includes an image detection unit, in which a plurality of pixels for converting visible light into signal information are arranged in a two-dimensional manner on a substrate and the plurality of pixels each are connected to one of a plurality of row select lines extending in a row direction and to one of a plurality of signal lines extending in a column direction, and a fluorescence conversion film, which is placed on the plurality of pixels and converts radiation into visible light, the method **characterized by** comprising the steps of:
applying sequentially drive voltage to each of the row select lines; reading image signal information through the signal line connected to a group of pixels that are connected to one arbitrary row select line to which the drive voltage is applied; reading noise signal information through the signal line connected to all the pixels at a time when the drive voltage is not applied to all the row select lines; and correcting the image signal information on the basis of the noise signal information.

5. The method of driving the radiation image detector according to claim 4, **characterized in that**
a period T₁ during which the image signal information is read is equal to a period T₂ during which the noise signal information is read.

6. The method of driving the radiation image detector according to claim 4, **characterized in that**
a period T₃ during which the noise signal information is read is longer than a period T₁ during which the image signal information is read.
